# EUROPEAN PATENT APPLICATION

(11) **EP 1 769 684 A2**
(43) Date of publication of application: **04.04.2007**
(21) Application number: 06020365.0
(22) Date of filing: 28.09.2006
(51) Int. Cl.: A23G 9/28

(54) **An apparatus for the cutting through of an extruded low-temperature ice mass and use hereof**

(30) Priority: 29.09.2005 DK 200501362
(71) Applicant: Tetra Laval Holding & Finance S.A., 1009 Pully (CH)
(72) Inventor: Bendixen, Ole, 8464 Galten (DK); Trudslev, Jens Erik, 8310 Tranbjerg J (DK)
(74) Representative: Schmidt, Jens Joergen

(57) **Abstract**

An apparatus is disclosed for cutting through a mass of consumer ice extruded out of a nozzle. The cutting means comprise an elongated blade, where that part which has contact with the ice mass during operation has a substantially greater electrical resistance per unit length in the longitudinal direction than those parts which do not have contact with the ice mass, and means for applying an electrical potential over the length of the blade, so that the variation in the electrical resistance of the blade results in that the electrical heating per unit length of the blade is substantially greater in that part which during operation has contact with the ice mass than in the parts which do not have contact with the ice mass.

## Description

The present invention relates to an apparatus and a method of use of such apparatus for cutting through an extruded mass of consumer ice which is extruded out of a nozzle, said apparatus comprising cutting means which, immediately outside the nozzle, cut the extruded ice mass into product pieces which fall down onto a receiving arrangement for further processing.

### BACKGROUND

In the production of ice lollies or other consumable ice products of an ice cream mass, it is common procedure to extrude an ice cream mass of high viscosity out of a nozzle, where at a predetermined interval of time the ice mass hanging out from the nozzle is cut off and is received on a conveyor for further handling. The nozzle is designed with regard to the shape that the ice product is desired to have.

In this connection there is known an arrangement for cutting operation, where a metal wire is passed through the ice mass hanging from the nozzle, whereby the protruding portion is separated from that part of the ice mass which is on its way out of the nozzle. This metal wire is typically a hot wire, so that the passing of the wire through the ice mass is carried out quickly and easily.

However, this cutting through is not suitable for the cutting through of an ice mass with solid ingredients, such as nuts, berries or the like, for the reason that the wire does not have a cutting edge, and the ingredients can not be cut by being melted through.

There is known an alternative arrangement where the ice mass is cut through with a rotating knife. The relatively firm ice mass can hereby be cut through also if it contains solid ingredients, such as berries, nuts or the like.

However, the result of this cutting is that the cut-off portion of ice cream is influenced with a laterally-oriented kinetic impulse, the consequence being that the portion does not necessarily fall straight down onto the underlying conveyor. This makes the further handling and processing of the portions difficult, because they are delivered to the underlying conveyor in a disorderly and unpredictable pattern. This has proved to be an obstacle in connection with the automation of the production of such ice cream products.

There is also known an arrangement from WO 2004/012519, where the extruded ice mass is cut over by two knives with oppositely-directed cutting directions. The protruding ice mass is hereby influenced by two opposing kinetic impulses, so that the portion cut off falls substantially straight down onto the underlying conveyor.

### BRIEF DESCRIPTION OF THE INVENTION

The invention relates to an apparatus and a method of the earlier-mentioned kind, where the cutting means comprise an elongated blade, where that part of the blade which has contact with the ice mass during operation has a substantially greater electrical resistance per unit length in the longitudinal direction than those parts which do not have contact with the ice mass, and means for heating of the blade during operation by applying an electrical potential over its length, so that the variation in the electrical resistance of the blade results in that the electrical effect which is dissipated per unit length of the blade is on average substantially greater in that part which during operation has contact with the ice mass than in the parts which do not have contact with the ice mass.

There can hereby be achieved a cutting through of an ice mass where, in that part of the cutting means which has contact with the ice mass, more heat is developed per unit length than in those parts which do not have contact with the ice mass. In practice this means that the part of the cutting means which has contact with the ice mass can develop relatively more heat than a cutting means with a constant electrical resistance per unit length in the longitudinal direction, without those parts of the cutting means which do not have contact with the ice mass reaching an inexpediently high temperature, which results in parts of the ice mass which accidentally come into contact with these parts of the cutting means during production being burned and stick to the cutting means. Among other things, such a burning and sticking can result in a soiling of the cut-off product pieces or portions by a peeling-off of the burned parts during operation, and on the whole the burning and sticking constitutes a hygienic and operational problem.

With the increased temperatures of the blade, it is not only achieved that the cut-off product pieces obtain an aesthetically better appearance, in that the cut can be effected more smoothly than with a corresponding apparatus with an electrically heated metal wire with homogenous electrical resistance, but also that it is possible to use the apparatus according to the present invention for the cutting through of ice masses with a lower temperature, e.g. between minus 6°C and minus 20°C, such as minus 10°C and minus 18°C, and preferably between minus 12°C and minus 15°C. The advantage of extruding ice masses with a temperature lower than the normal temperatures, which lies a few degrees under the freezing point of the ice mass, is that one can hereby avoid having subsequently to send the products through a cooling tunnel in order to achieve the storage temperature of around minus 18°C before the products are transported to final storage. Moreover, the formation of larger ice crystals in the products is avoided, which occurs during such a subsequent cooling procedure or hardening, and such ice crystals result in a reduction of the taste experience of the products. Products which are extruded from a low-temperature mass in the manner described can thus be produced with a low fat content without any negative influence on the taste experience of the consumers of the product. The present invention is thus an important contribution towards enabling consumer ice products in practice to be produced from an extruded ice mass with a low temperature.

The apparatus according to the present invention is also particularly suitable for use with an extruded ice mass which contains solid ingredients, such as berries, nuts, pieces of chocolate and/or pieces of fruit, in that the blade can be produced as a mechanically stronger and more durable cutting means than a heated metal wire.

In order to achieve the aforementioned effect of the invention to the most advantageous extent, it has shown that the part of the blade which has contact with the ice mass during operation should preferably have an electrical resistance per unit length which on average is more than 150%, preferably more than 200% and most preferable more than 250%, of the average resistance per unit length of those parts of the blade which do not have contact with the ice mass.

In the preferred embodiment of the invention, the blade consists of a thin and elongated plate, where that part which has contact with the ice mass during operation has a substantially smaller cross-sectional area than those parts which do not have contact with the ice mass. Use is hereby made of the fact that the electrical resistance per unit length, and herewith the development of heat, is inversely proportional to the cross-sectional area. A corresponding effect could be achieved by producing the blade parts from materials with different resistivities.

In a preferred embodiment of the invention, the thickness of the blade in the extrusion direction of the ice mass is substantially constant over the length of the blade, so that the blade can be produced from a sheet material with uniform thickness and electrical characteristics, e.g. by stamping or cutting out.

In a preferred embodiment of the invention, the thickness of the plate is between 0.25 mm and 2 mm, in that a thickness of between 0.4 mm and 1.5 mm is preferred.

In the preferred embodiment of the invention, at least that edge or those edges of the plate which during operation face in the cutting direction and which come into contact with the ice mass are of a tapered configuration. The cutting-off of the protruding ice mass will hereby be more smooth, and the product piece cut off will appear aesthetically more attractive with a more smooth surface and sharply cut-off edges. In a more preferred embodiment, both edges of the blade are of tapered configuration. When the rear edge is tapered, the blade leaves the cut-off product piece with a smoother and sharper shape, and the blade can also be used for cutting in both directions.

In the preferred embodiment of the invention, it is arranged to cut through the extruded ice mass at a frequency which lies between 80 and 200 times per minute, preferably between 100 and 150 times per minute.

In a preferred embodiment of the invention, the means for applying an electrical potential to the blade over its longitudinal direction is arranged to vary the voltage during operation in accordance with the frequency with which the extruded ice mass is cut by the blade, so that the blade is heated in connection with its cutting through of the ice mass, and that the voltage is reduced or cut off when the blade is not in contact with the ice mass, hereby avoiding an unnecessary increase in blade temperature with subsequent risk of the ice mass burning and sticking to the blade.

The blade is preferably made of stainless steel for the reason that this material is inexpensive, strong and durable, and has good characteristics with regard to hygiene, but alternative use could be made of other materials with high resistivity, such as carbon or caltan, alone or in combination with each other or other materials such as stainless steel.

In an advantageous embodiment, the cross-sectional shape of the blade in that part which comes into contact with the ice mass during operation is elongated, so that the length of the blade in the cutting direction is at least twice as great as the thickness in the direction of extrusion, and preferably at least three times greater. For thick blades, the length in the cutting direction can be far greater, e.g. five or ten times greater.

In a special embodiment, the cutting means comprise two of said blades, where the means for moving the cutting means are arranged to move each of the two blades for the cutting-off of the extruded ice mass from opposite sides, and in displaced planes which are parallel with the mouth of the nozzle, and herewith standing substantially perpendicular to the extrusion direction of the ice mass thus performing a cutting-off of the product pieces. For this embodiment, it is an advantage that the edges of the two blades in the cutting direction meet with a mutual angle in their movement plane between 0° and 45°, preferably between 5° and 30°, so that during the cutting process the two edges only pass each other at one point at a time, with less risk of the two abutting against each other. Moreover, less power is used to drive the blades towards each other when a cut is made only at one point at a time.

The present invention further relates to the use of the apparatus as disclosed herein for the cutting through of an extruded ice mass.

### BRIEF DESCRIPTION OF THE DRAWINGS

In the following, the invention will be described in more detail with reference to the drawings, where
- Fig. 1: shows a schematic side view of an arrangement for the cutting through of an extruded ice mass according to the invention, with one blade in an inactive position,
- Fig. 2: shows the arrangement according to fig. 1 with the blade in an advanced position,
- Fig. 3: shows a schematic side view of a second arrangement for the cutting through of an extruded ice mass according to the invention, with two blades in an inactive position,
- Fig. 4: shows the arrangement according to fig. 3 with the blades in an advanced position,
- Fig. 5A: shows a preferred embodiment of the blade as seen in the direction of extrusion of the ice mass,
- Fig.5B: shows a cross-sectional view of the blade shown in fig. 5A, and
- Fig. 6: shows a perspective view of the blade and means for moving the blade, where the blade is in an advanced position, and a partial cross-sectional view of the extrusion nozzle.

### DETAILLED DESCRIPTION OF EMBODIMENTS

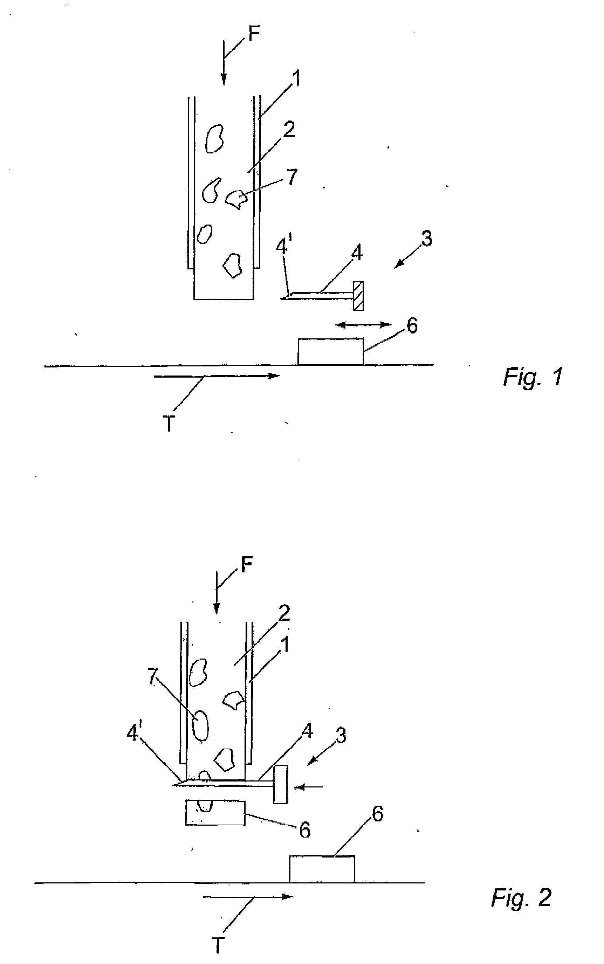

In figs. 1 and 2 there is shown an arrangement for the cutting through of an extruded ice mass 2 according to a preferred embodiment of the invention. An ice mass 2 is shaped by extrusion out of a nozzle 1 in the form of a tubular piece with a predetermined cross-sectional configuration, The ice mass 2, which has a high viscosity and a temperature of between minus 12°C and minus 15°C, is pressed out of the nozzle 1 at a substantially constant speed of flow F. Immediately at the mouth of the nozzle 1 there is arranged a cutting-through arrangement 3 which comprises a blade 4 which, moves in a plane substantially orthogonal to the direction of flow or direction of extrusion of the ice mass 2. In fig. 1 the blade 4 is shown in its inactive position, and in fig. 2 it is shown in its advanced position. As shown in the figures, in the ice mass 2 there can be solid ingredients 7 in the form of berries, nuts, pieces of chocolate and/or pieces of fruit, which is desirable with regard to the production of ice products of various kinds. With the ice mass 2 being continuously extruded out from the nozzle 1 at a substantially constant speed of flow F, the thickness of the cut-off pieces 6 will be uniform and, if the arrangement 3 is activated at a constant frequency, and the distance on the conveyor T will be substantially the same. This frequency of typically 100-150 times per minute can preferably be adjustable in relation to the actual product which the apparatus is desired to produce. The blade 4 has a sharpened edge 4'.

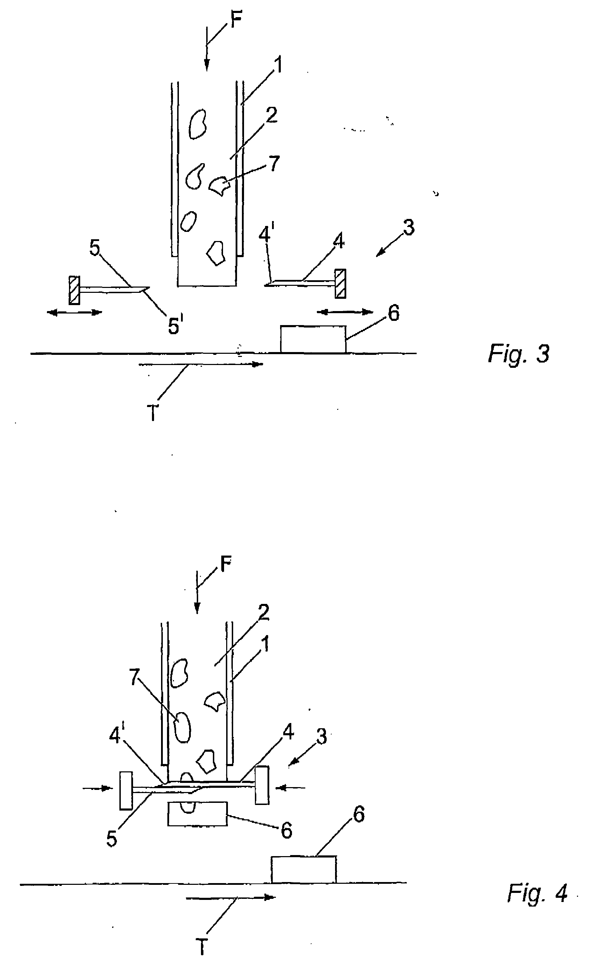

In figs. 3 and 4 there is shown a second arrangement for the cutting through of an extruded ice mass according to a second preferred embodiment of the invention. Immediately at the mouth of the nozzle 1, there is provided a cutting-through arrangement 3 which comprises two oppositely-facing blades 4 and 5 which move in planes substantially orthogonal in relation to the direction of flow of the ice mass and mutually displaced. Together, the blades 4 and 5 thus carry out a kind of clipping-over of the ice cream hanging out of the nozzle 1. The second blade 5 also has a sharpened edge 5'.

The arrangements shown in the figures further comprise means (not shown) for applying an electrical potential to the blade 4 or to the blades 4 and 5 for the heating hereof, where the voltage is regulated in accordance with the cutting-through cycle, so that the blade 4 or the blades 4, 5 are heated only just before contact and while it is in contact with the ice mass 2, so that unintentional heating of the blade 4 or the blades 4, 5 is hereby avoided.

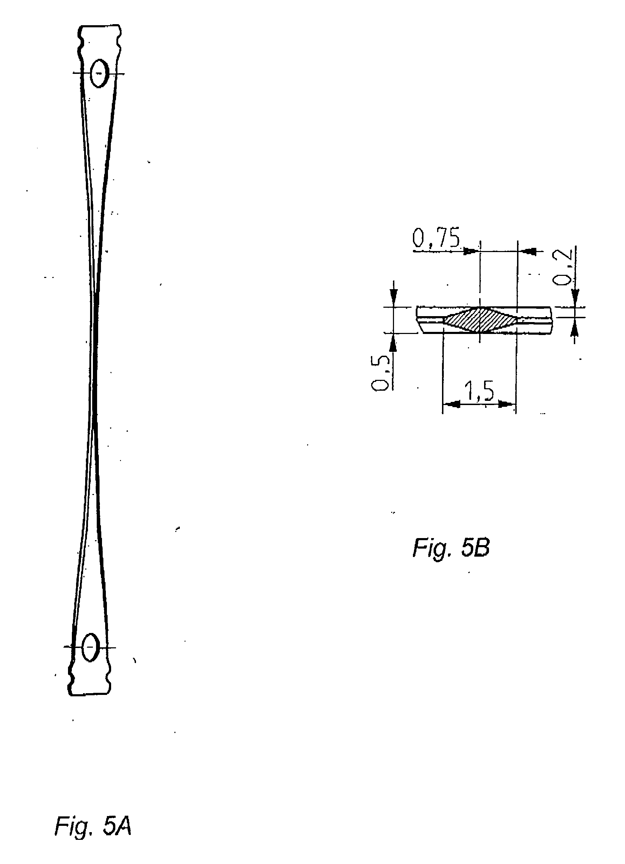

A preferred blade 4 is shown in figs. 5A and 5B. The blade 4 is laser-cut from a stainless steel sheet with a thickness of 0.5 mm, and is cut following two circle arcs of a radius of 300 mm, so that at its narrowest place 8 the blade is 1.5 mm wide and 10 mm wide at the securing parts 9. That part 10 of the blade 4 which is in contact with the side edge of the extruded ice mass 2 is approx. 3 mm wide, so that the width of that part of the blade which is in contact with the ice mass 2 during operation varies between 1.5 mm and 3 mm. The narrowest part 8 of the blade 4 is shown in cross-section in fig. 5B with indication of dimensions in mm. It will be seen in fig. 5B that the edges 11, 12 of the blade 4 are tapered in order to ease the passing of the blade 4 through the ice mass 2, and to provide the cut-off portions 6 with an aesthetically more advantageous appearance.

For other purposes, e.g. the cutting-through of extruded ice masses 2 of a greater cross-sectional area or with a higher content of solid ingredients 7, the blade 4 can be configured with other dimensions, e.g. from a 1mm thick sheet of stainless steel, where the narrowest place 8 on the blade 4 is 10 mm wide, and that part 10 of the blade 4 which is in contact with the side edge of the extruded ice mass 2 is approx. 13 mim wide, and where at the securing parts 9 the blade 4 is 28 mm wide. The variations in width and herewith the cross-sectional area of the blade 4 have the result that a greater effect is dissipated in the centremost part of the blade and a smaller electrical effect in the outer parts, and herewith a lesser heating of the blade parts.

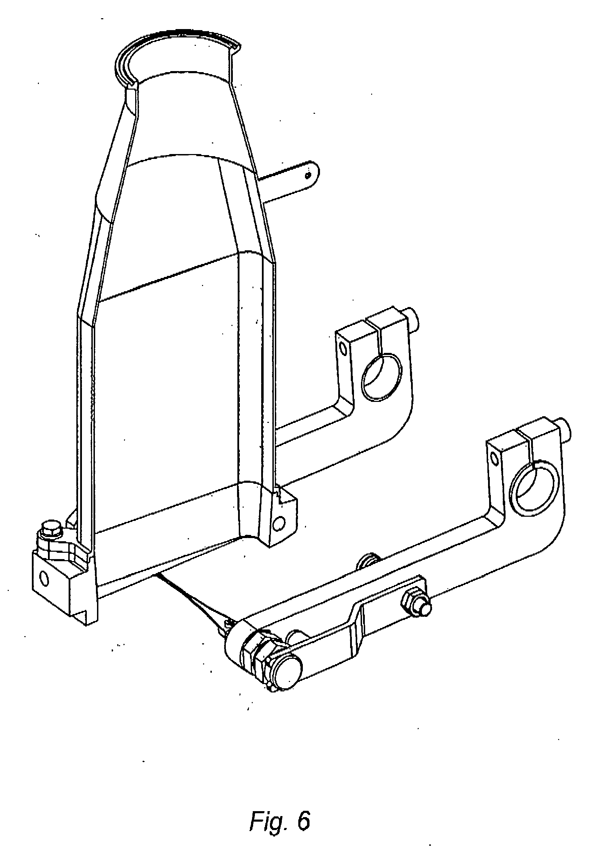

Fig. 6 shows the nozzle 1, the blade 4 and means 13 for moving the blade 4, where the blade 4 is in an advanced position. The means 13 are designed to drive the blade 4 forwards and backwards through a complete cycle (360°). Control means (not shown) receive a signal with a given frequency to indicate when a cutting through is to be started, and the thickness of the ice piece 6 to be cut off is controlled depending on the length of time which expires between these signals. There is preferably also arranged a signal provider (not shown) which registers when the blade 4 is in the start or the end position. This signal is used for the activation of the control means for the braking/engagement of the blade 4.

The lowermost part 14 of the nozzle consists of a unit manufactured in a plastic material, and with a built-in piece 15 with tubing through which heated water is led for the heating of this part 14, so that the extruded ice mass 2 slides easier and the cut-off portion pieces 6 are given smoother vertical surfaces, whereby an advantageous aesthetic appearance of the pieces 6 is achieved. Moreover, the construction of the lowermost part 14 of the nozzle in plastic results in less wear on the blade 4 than is the case when the corresponding part 14 is configured in stainless steel.

In the above, the invention is described in relation to two example embodiments. However, in connection with the invention it is realised that equivalent embodiments such as, e.g., other types of mechanical arrangements for the guiding and control of the movements of the blade 4, can be provided without deviating from the basic concept of the invention such as disclosed in the associated claims.

## Claims

1. An apparatus for the cutting through of an ice mass which is extruded out of a nozzle, said apparatus comprising cutting means and means for the movement of the cutting means immediately in front of the mouth of the nozzle for the cutting of the extruded ice mass into product pieces which fall down onto a receiving arrangement for further processing,
**characterised in that**
the cutting means comprise an elongated blade, where that part of the blade which during operation has contact with the ice mass has a substantially greater electrical resistance per unit length in the longitudinal direction than those parts which do not have contact with the ice mass, and means for the heating of the blade during operation by the application of an electrical potential over the length of the blade, so that the variation in the electrical resistance of the blade results **in that** the electrical effect which is dissipated per unit length of the blade is on average substantially greater **in that** part which during operation has contact with the ice mass than in those parts which do not have contact with the ice mass.

2. An apparatus according to claim 1, where the electrical resistance per unit length of that part of the blade which has contact with the ice mass during operation is on average more than 150%, preferably more than 200%, and most preferably more than 250% of the average resistance per unit length of those parts of the blade which do not have contact with the ice mass.

3. An apparatus according to claim 1 or 2, where the blade consists of a thin and elongated plate, where that part which has contact with the ice mass during operation has a substantially smaller cross-sectional area than those parts which do not have contact with the ice mass.

4. An apparatus according to claim 3, where the thickness of the plate in the direction of extrusion of the ice mass is substantially constant over the whole length of the blade.

5. An apparatus according to claim 4, where the thickness of the plate is between 0.25 mm and 2 mm, where a thickness between 0.4 and 1,5 mm is preferred.

6. An apparatus according to claim 4 or 5, where at least that edge or those edges of the plate which during operation face in the cutting direction and which come into contact with the ice mass during operation are of a tapering configuration.

7. An apparatus according to any of the preceding claims, which is arranged to cut through the extruded ice mass with a frequency which lies between 80 and 200 times per minute, preferably between 100 and 150 times per minute.

8. An apparatus according to any of the preceding claims, where the means for applying an electrical potential to the blade over the length of the blade are arranged to vary the voltage during operation in accordance with the frequency with which the extruded ice mass is cut by the blade.

9. An apparatus according to claim 1, **characterised in that** the blade is made of stainless steel.

10. An apparatus according to any of the preceding claims, where the cross-sectional shape of the blade, in that part which during operation comes into contact with the ice mass, is of an elongated configuration, so that the length in the cutting direction is at least twice as great as the thickness in the direction of extrusion, preferably at least three times greater.

11. An apparatus according to claim 10, where both edges of the blade, in that part which comes in contact with the ice mass during operation, are of a tapering configuration.

12. An apparatus according to any of the preceding claims, where the cutting means comprise two of said blades, and where the means for moving the cutting means are arranged to move the two blades for cutting through the extruded mass from opposite sides and in displaced planes.

13. An apparatus according to claim 12, where the means for moving the cutting means are arranged to move the two blades in such a manner that the edges of the blades in the cutting direction meet in their plane of movement with a mutual angle between 0° and 45°, preferably between 5° and 30°,

14. Use of an apparatus according to any of the claims 1 to 13 for the cutting through of an extruded ice mass.

15. Use according to claim 14, where the extruded ice mass has a temperature between minus 6°C and minus 20°C, such as between minus 10°C and minus 18°C, and preferably between minus 12°C and minus 15°C.

16. Use according to claim 14 or 15, where the extruded ice mass contains solid ingredients such as berries, nuts, pieces of chocolate and/or pieces of fruit.
